# DEMANDE DE BREVET EUROPEEN

(11) **EP 4 667 245 A1**
(43) Date de publication de la demande: **24.12.2025**
(21) Numéro de dépôt: 25183134.3
(22) Date de dépôt: 16.06.2025
(51) Int. Cl.: B60G 3/04, B60G 13/00, B60G 11/08

(54) **ARCHITECTURE DE SUSPENSION D'UN MODULE DE ROUE SUR UN CHÂSSIS**

(30) Priorité: 18.06.2024 FR 2406513
(71) Demandeur: NTN Europe, 74000 Annecy (FR)
(72) Inventeur: BAUDU, Alexandre, 74010 Annecy (FR); POURROY-SOLARI, Vincent, 74230 Thones (FR)
(74) Mandataire: Sayettat, Julien Christian

(57) **Abrégé**

L'invention concerne une architecture de suspension comprenant un module de roue, un châssis, un organe de suspension élastique et une jambe comprenant une tige (7) montée de façon télescopique dans un corps associé au module de roue, ladite architecture comprenant une pièce (13) de liaison de la tige (7) à une paroi (14) dudit châssis, qui comprend un alésage (15) entouré par une jupe inférieure (16) et un manchon supérieur (17) muni d'une bride (22) intégrant des moyens (23) de fixation sur la paroi (14), ladite architecture comprenant en outre un bloc filtrant (30) disposé dans le manchon supérieur (17) en étant à l'interface entre la pièce (13) et la paroi (14), ainsi qu'une butée de choc (25) et qu'un soufflet (26) fixés chacun à la jupe inférieure (16), l'organe de suspension élastique étant dissocié de la pièce (13) en étant associé entre le module de roue et le châssis.

## Description

L'invention concerne une architecture de suspension d'au moins un module de roue sur un châssis de véhicule automobile.

Elle s'applique en particulier à une architecture de suspension destinée à un véhicule automobile de type quadricycle léger à moteur, par exemple une voiturette ou une voiture sans permis, un tel véhicule pesant généralement moins de 400 kg et roulant à une vitesse réduite, notamment inférieure ou égale à 45 km/h.

De façon connue, une architecture de suspension comprend un organe élastique et une jambe télescopique comprenant un amortisseur présentant une tige montée de façon télescopique dans un corps associé au module de roue.

L'organe de suspension élastique se présente classiquement sous la forme d'un ressort hélicoïdal qui est monté autour de la jambe de suspension en étant disposé en appui axial entre le module de roue et une butée de suspension.

Pour ce faire, la butée de suspension comprend une coupelle supérieure fixe destinée à être associée au châssis et une coupelle inférieure tournante comportant un appui direct ou indirect pour le ressort de suspension, lesdites coupelles formant entre elles une interface de rotation relative autour d'un axe.

La butée de suspension porte également une butée de choc destinée à limiter le débattement de la suspension sous charge, un bloc filtrant agencé pour limiter la transmission des vibrations entre le module de roue et le châssis par l'intermédiaire de la suspension, ainsi qu'un soufflet de protection.

Ces types d'architectures s'avèrent toutefois lourdes et encombrantes, et n'apparaissent donc pas parfaitement adaptées pour la suspension d'un module de roue d'un véhicule automobile léger.

L'invention vise à perfectionner l'art antérieur en proposant notamment une architecture de suspension d'encombrement et de poids réduits, qui est particulièrement adaptée pour les véhicules automobiles légers.

A cet effet, l'invention propose une architecture de suspension d'au moins un module de roue sur un châssis de véhicule automobile, ladite architecture comprenant ledit module de roue, ledit châssis, un organe de suspension élastique et une jambe de suspension télescopique comprenant un amortisseur présentant une tige montée de façon télescopique dans un corps associé au module de roue, ladite architecture comprenant en outre une pièce de liaison de la tige à une paroi dudit châssis, ladite pièce de liaison comprenant un alésage de réception de la tige, ainsi qu'une jupe inférieure et qu'un manchon supérieur entourant chacun ledit alésage, ledit manchon supérieur étant muni d'une bride intégrant des moyens de fixation sur la paroi, ladite architecture comprenant en outre un bloc filtrant qui est disposé dans le manchon supérieur en étant à l'interface entre la pièce de liaison et la paroi, ainsi qu'une butée de choc et qu'un soufflet fixés chacun à la jupe inférieure, l'organe de suspension élastique étant dissocié de la pièce de liaison en étant associé entre le module de roue et un support du châssis.

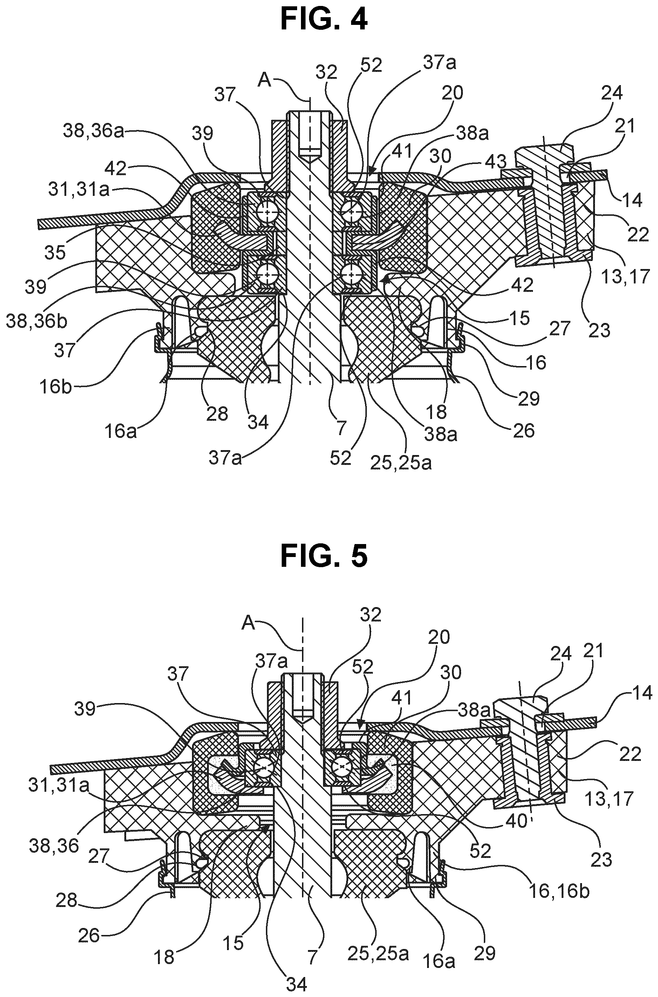

D'autres particularités et avantages de l'invention apparaîtront dans la description qui suit, faite en référence aux figures jointes, dans lesquelles :
[Fig.1a] et
[Fig.1b] représentent chacune, en perspective suivant différentes vues, une partie d'un châssis de véhicule automobile sur laquelle sont montés deux modules de roue, chacun desdits modules de roue étant suspendu audit châssis au moyen d'une architecture selon l'invention ;
[Fig.2a] et
[Fig.2b] représentent chacune une partie supérieure d'une jambe de suspension d'une architecture de suspension selon un premier mode de réalisation de l'invention, respectivement en perspective éclatée (figure 2a) et en coupe axiale (figure 2b) ;
[Fig.3] représente, en perspective et en coupe axiale, une pièce de liaison de l'architecture de suspension des figures précédentes ;
[Fig.4] représente, en coupe axiale partielle, la partie supérieure d'une jambe de suspension d'une architecture de suspension selon un deuxième mode de réalisation de l'invention ;
[Fig.5]
[Fig.6]
[Fig.7]
[Fig.8]
[Fig.9]
   représentent chacune, en coupe axiale partielle, la partie supérieure d'une architecture de suspension selon respectivement une variante du deuxième mode de réalisation représenté sur la figure 4.

En relation avec les figures, on décrit ci-dessous une architecture de suspension d'au moins un module de roue 1 sur un châssis 2 de véhicule automobile.

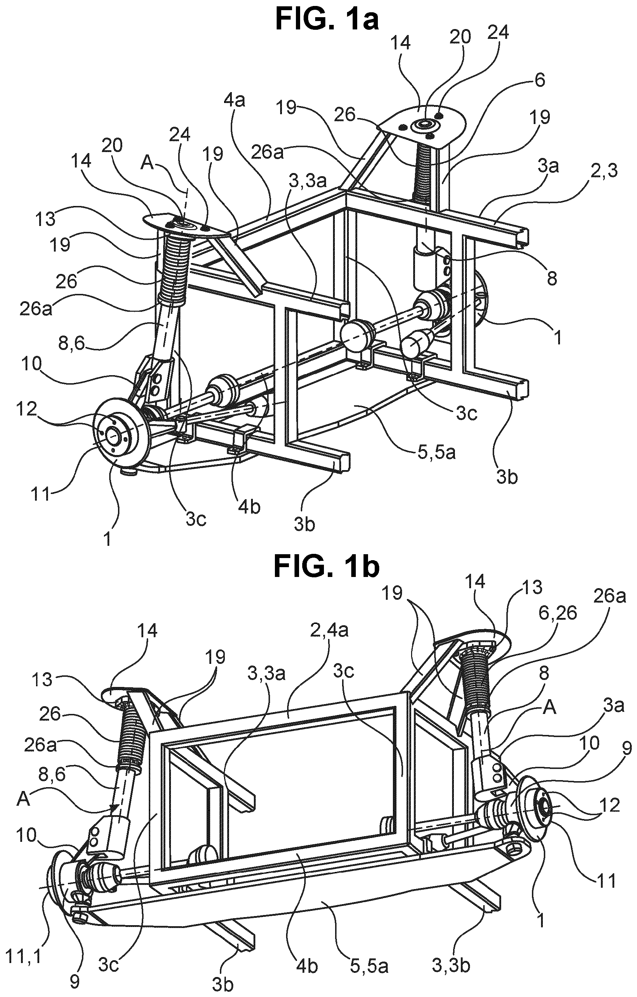

Sur les figures 1a et 1b, le châssis 2 est formé par assemblage, notamment par soudure, de tubes métalliques de section sensiblement rectangulaire, de manière à présenter deux montants latéraux verticaux 3 formés chacun de deux poutres horizontales respectivement supérieure 3a et inférieure 3b reliées entre elles par au moins un poteau vertical 3c d'extrémité, lesdits montants latéraux étant reliés par deux barres transversales respectivement supérieure 4a et inférieure 4b qui s'étendent chacune entre les poutres respectivement supérieures 3a et inférieures 3b desdits montants.

L'architecture comprend deux modules de roue 1 qui sont montés chacun de part et d'autre du châssis 2, sur respectivement un montant latéral 3, au moyen d'un organe 5 de suspension élastique et d'une jambe 6 de suspension télescopique, ladite jambe comprenant un amortisseur présentant une tige 7 montée de façon télescopique dans un corps tubulaire 8 associé audit module de roue.

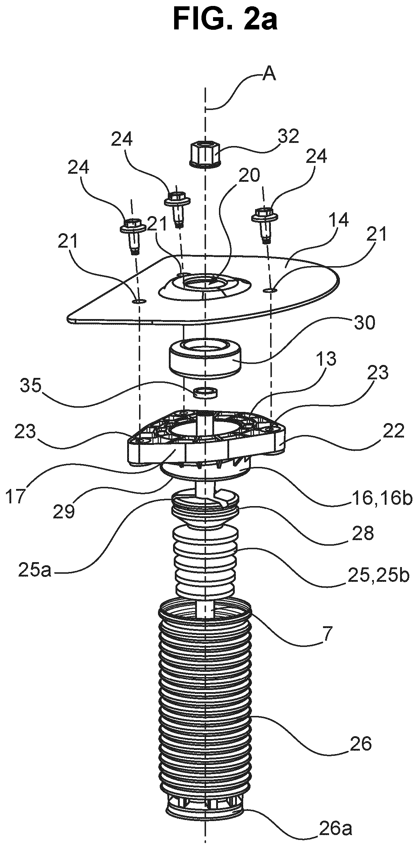

Dans cette description, les termes de positionnement dans l'espace sont pris en référence à l'axe A de translation télescopique de la tige 7 dans le corps 8 (vertical sur les figures 2a, 2b, 3 à 9). En particulier, les termes « intérieur » et « extérieur » sont relatifs à une disposition respectivement proche et à distance de cet axe A, et les termes « axial » et « radial » sont relatifs à une disposition respectivement suivant cet axe A et s'éloignant ou se rapprochant de lui.

Par ailleurs, les termes « supérieur » ou « dessus » et « inférieur » ou « dessous » sont relatifs à la disposition de l'architecture dans les conditions normales d'utilisation du véhicule automobile, telle que représentée sur les figures 1a et 1b.

Sur les figures, chaque module de roue 1 comprend un moyeu 11 et un fût externe fixe 9 associé par un bras 10 à une extrémité inférieure du corps tubulaire 8 correspondant, ledit moyeu étant pourvu d'orifices 12 pour le montage d'une roue (non représentée).

L'architecture comprend en outre une pièce 13 de liaison de la tige 7 à une paroi 14 du châssis 2, ladite pièce comprenant un alésage 15 de réception de ladite tige, ainsi qu'une jupe inférieure 16 et un manchon supérieur 17 entourant chacun ledit alésage.

En relation avec les figures 2a, 2b, 3 à 9, la pièce de liaison 13 est formée d'une seule pièce, notamment par injection et moulage d'un matériau thermoplastique, de préférence à base de polypropylène ou de polyamide (PA6), éventuellement renforcé de fibres de verre.

En particulier, l'alésage 15 de réception de la tige 7 est formé dans un plateau radial 18, de part et d'autre duquel le manchon supérieur 17 et la jupe inférieure 16 s'étendent sensiblement axialement.

Sur les figures 1a et 1b, le châssis 2 comprend deux parois latérales 14 associées chacune au moyen de deux barres tubulaires 19 sur une poutre supérieure 3a de respectivement un montant latéral 3, chaque paroi 14 comprenant un alésage central 20 par lequel une extrémité supérieure d'une tige 7 fait saillie, ainsi que trois orifices 21 équirépartis angulairement autour dudit alésage central pour permettre la fixation de la pièce de liaison 13 portant ladite tige.

Pour ce faire, le manchon supérieur 17 est muni d'une bride 22 intégrant des moyens 23 de fixation sur la paroi 14 correspondante du châssis 2, lesdits moyens se présentant notamment sous la forme d'inserts 23, par exemple en matériau métallique, qui sont fixés dans la pièce de liaison 13 correspondante, notamment par surmoulage ou frettage, afin de permettre la fixation au moyen de vis 24 de ladite pièce de liaison dans les orifices 21 de la paroi 14. En variante, l'insert 23 peut être sous la forme d'un goujon permettant la fixation au moyen d'un écrou.

L'architecture comprend en outre une butée de choc 25 pour limiter le débattement de la suspension lors des chocs de la roue sur le sol, ainsi qu'un soufflet 26 de protection qui sont chacun fixés à la jupe inférieure 16 correspondante.

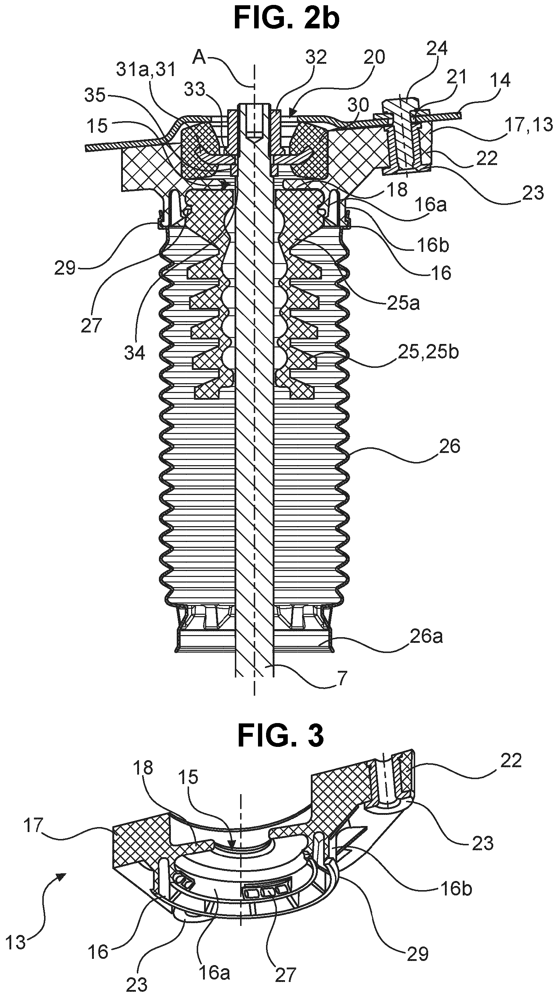

En relation avec les figures 2b et 4 à 9, la butée de choc 25 présente une tête 25a qui est disposée dans la jupe inférieure 16, en venant en appui axial sous le plateau 18, ainsi qu'un tronc 25b qui s'étend axialement sous ladite jupe en entourant la tige 7.

En particulier, la périphérie intérieure de la jupe inférieure 16 présente des crochets 27 équirépartis angulairement et sur lesquels la tête de la butée de chocs est fixée par encliquetage desdits crochets dans une gorge annulaire 28 prévue à cet effet en périphérie de ladite tête.

Sur les figures, la périphérie extérieure de la jupe inférieure 16 présente un bourrelet annulaire 29 autour duquel une extrémité supérieure du soufflet 26 est fixée, par exemple par sertissage.

En particulier, la jupe inférieure 16 comprend deux parois intérieure 16a et extérieure 16b concentriques, les crochets 27 de fixation de la butée de chocs 25 étant formés sur la périphérie intérieure de ladite paroi intérieure, et le bourrelet annulaire 29 de fixation du soufflet de protection 26 étant formé sur la périphérie extérieure de ladite paroi extérieure.

En relation avec les figures 1a et 1b, le soufflet 26 entoure la tige télescopique 7 depuis le corps 8 de l'amortisseur jusqu'à la jupe inférieure 16, et présente pour ce faire une extrémité inférieure 26a destinée à être fixée en partie supérieure dudit corps d'amortisseur.

Pour limiter la transmission des vibrations au châssis 2, l'architecture comprend en outre un bloc filtrant 30 qui est disposé dans le manchon supérieur 17 en étant à l'interface entre la pièce de liaison 13 et la paroi correspondante 14 dudit châssis.

Ainsi, la pièce de liaison 13 permet de regrouper les fonctions de montage du bloc filtrant 30, de fixation de la jambe 6 de suspension au châssis 2, de montage de la butée de choc 25 et du soufflet 26 de protection, ainsi que la fonction de transmission au châssis 2 des efforts d'amortissement.

Par ailleurs, l'organe 5 de suspension élastique de la jambe 6 est dissocié de la pièce 13 de liaison au châssis, en étant associé entre le module de roue 1 et un support dudit châssis, ledit support étant notamment la poutre inférieure 3b du montant latéral 3 adjacent.

Cet agencement permet de s'affranchir de l'utilisation d'une butée de suspension et d'un organe de suspension élastique à disposer autour de la jambe télescopique, et ainsi de limiter le poids et l'encombrement de l'architecture de suspension.

De façon avantageuse, l'organe 5 de suspension comprend une barre élastique 5a formant un ressort à lame transversal, ladite barre étant fixée de part et d'autre au module de roue 1, notamment à son fût extérieur 9, et à la poutre latérale inférieure 3b adjacente du châssis.

En relation avec les figures, les deux modules de roue 1 sont reliés par une barre élastique 5a commune, qui est fixée sous chaque fût extérieur 9 et sous les poutres inférieures 3b de chaque montant latéral 3.

Une telle barre élastique 5a peut non seulement faire office d'organe 5 de suspension élastique pour chacun des modules de roue 1, mais également remplir des fonctions de triangle de suspension et de barre anti-roulis. Ainsi, on limite d'autant plus l'encombrement global de l'architecture de suspension au sein du véhicule automobile.

Comme représenté sur les figures 2b et 4 à 9, le bloc filtrant 30 comprend une armature rigide 31, notamment formée par emboutissage d'une tôle en matériau métallique, pour permettre le montage dudit bloc sur la tige 7 de suspension.

L'architecture comprend une douille 32 de serrage de l'armature 31 montée, notamment par vissage sur une extrémité supérieure taraudée de la tige 7. De façon avantageuse, l'armature 31 comprend une rondelle 31a qui présente un alésage 33 de montage autour de la tige 7, la douille 32 venant serrer axialement ladite armature sur un épaulement radial 34 formé sur ladite tige.

Le bloc filtrant 30 présente une géométrie torique dans laquelle l'armature de montage 31 est disposée. En particulier, le bloc filtrant 30 est réalisé en un matériau plastique ou en caoutchouc, et peut être directement surmoulé autour de son armature 31 de montage.

Le bloc filtrant 30 peut également être fixé dans le manchon supérieur 17 directement par surmoulage, notamment après disposition de l'armature 31 dans ledit manchon, ou par sertissage après sa formation par moulage.

Dans le mode de réalisation représenté sur les figures 2a et 2b, le bloc filtrant 30 est fixé sur la tige 7, de manière à être solidaire en rotation autour de son axe A de translation télescopique. En particulier, l'architecture comprend une entretoise 35 qui est disposée axialement entre l'épaulement 34 et l'armature 31, la douille 32 venant serrer axialement ladite armature sur ladite entretoise après son montage sur la tige 7.

Les figures 4 à 9 représentent un autre mode de réalisation, dans lequel la tige 7 est montée en rotation par rapport au bloc filtrant 30, autour de son axe A de translation télescopique. Cet agencement s'avère particulièrement avantageux pour la suspension d'une roue directrice, car il permet, lorsque l'utilisateur du véhicule tourne le volant de direction, de limiter les frottements exercés par le bloc filtrant 30, et donc le couple résistif induit ainsi que les risques d'usure prématurée dudit bloc filtrant, ainsi que les risques d'usure du palier présent entre la tige 7 et le corps 8 de l'amortisseur.

Pour ce faire, l'architecture comprend un palier de guidage de la rotation relative entre la tige 7 et l'armature 31 de montage du bloc filtrant 30, ledit palier comprenant au moins un roulement 36, 36a, 36b qui présente une bague intérieure 37 solidaire de la tige 7 et une bague extérieure 38 solidaire de l'armature 31, chacune desdites bagues présentant une piste de roulement 37a, 38a formant entre elles un chemin de roulement dans lequel des corps roulants 39 sont disposés pour permettre la rotation relative desdites bagues.

Sur la figure 4, le palier de guidage comprend deux roulements 36a, 36b disposés respectivement au-dessus et au-dessous de l'armature de montage 31. Dans le mode de réalisation représenté, des corps roulants sphériques 39 sont disposés dans chacun des chemins de roulement avec un angle de contact, les roulements 36a, 36b étant montés en « O » pour pouvoir transmettre des efforts radiaux et des efforts axiaux dans les deux sens. Ainsi, dans cette réalisation, chaque roulement 36a, 36b est agencé pour guider les mouvements de braquage suivant respectivement un sens de rotation et pour transmettre les efforts suivant cinq axes (3 translations et 2 rotations) entre la tige 7 et le bloc 30, tout en libérant l'axe de rotation autour de la tige 7.

Sur les figures 5 à 9, le palier de guidage comprend un unique roulement 36 dans lequel des corps roulants sphériques 39 sont à quatre points de contact dans le chemin de roulement, afin de permettre audit roulement de guider les mouvements de braquage suivant les deux sens de rotation.

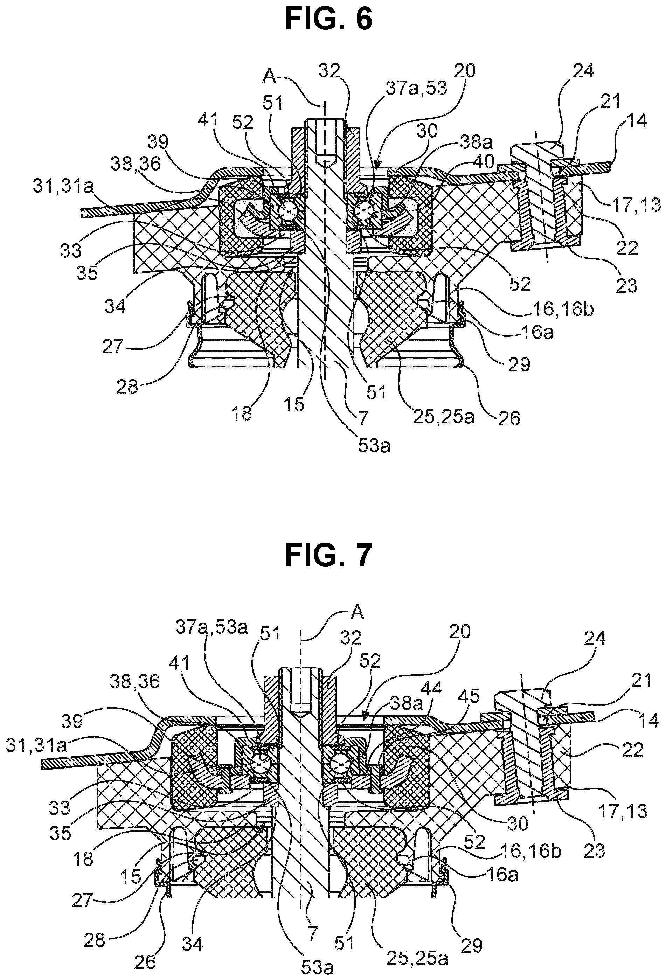

Sur les figures 4 et 7, l'armature de montage 31 est directement associée au bloc filtrant 30, notamment par surmoulage dudit bloc sur la périphérie de ladite armature. En particulier, la périphérie de l'armature 31 peut comprendre des orifices pour permettre l'ancrage du matériau formant le bloc filtrant 30 lors de son surmoulage sur ladite armature, afin de fiabiliser la fixation dudit bloc filtrant à ladite armature.

Sur les figures 5, 6, 8 et 9, le bloc filtrant 30 est associé à l'armature 31 par l'intermédiaire d'une couronne 40 de matériau, notamment thermoplastique, dont la rigidité est comprise entre celle de ladite armature et celle dudit bloc filtrant.

Sur les figures 4 à 7, l'armature de montage 31 est équipée d'une structure rigide 41 dans laquelle la bague extérieure 38 est fixée. En particulier, sur les figures 5 et 6, le bloc filtrant 30 est associé simultanément à la structure rigide 41 et à l'armature de montage 31 par l'intermédiaire d'une couronne de matériau 40 telle que décrite ci-dessus.

La structure rigide 41 peut également être fixée mécaniquement sur l'armature de montage 31, de façon alternative ou complémentaire à la présence d'une couronne de matériau 40 telle que décrite précédemment.

Ainsi, sur la figure 7, la structure rigide 41 comprend une paroi périphérique 44 sensiblement radiale qui est fixée à l'armature 31 au moyen de rivets 45.

Sur la figure 4, la structure rigide 41 comprend deux logements 42 disposés respectivement au-dessus et en dessous de l'armature 31 et dans chacun desquels est fixée une bague extérieure 38 de respectivement un roulement 36a, 36b, notamment par emmanchement, lesdits logements étant séparés axialement par une gorge annulaire 43 dans laquelle est emmanché le bord de l'alésage 33 de montage de la tige 7.

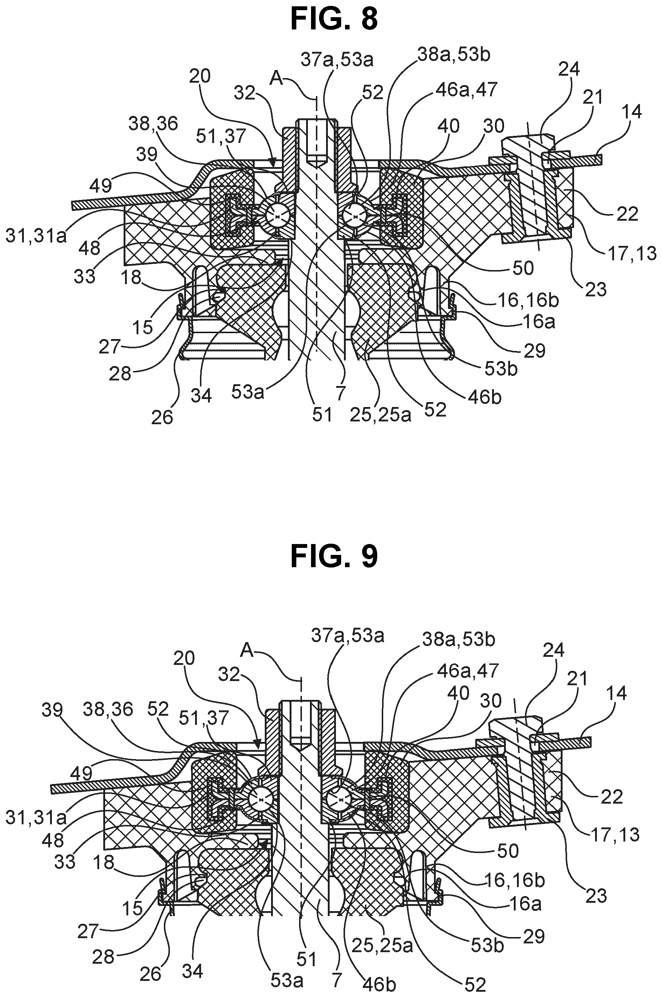

Sur les figures 8 et 9, l'armature de montage 31 présente une piste de roulement 38a pour former une bague extérieure 38.

Pour ce faire, l'armature de montage 31 comprend deux flancs respectivement supérieur 46a et inférieur 46b formant ensemble la rondelle 31a et sur lesquels respectivement une portion 53b de piste de roulement extérieure 38a est formée, lesdits flancs étant associés pour former un point de contact pour les corps roulants 39 sur chacune desdites portions.

Chaque flanc 46a, 46b comprend, de l'intérieur vers l'extérieur du palier :
- une portion intérieure 47 de section en quart de cercle, sur laquelle une portion 53b de piste de roulement extérieure 38a est formée ;
- une portion centrale 48 sensiblement radiale, dans laquelle sont formés des orifices pour permettre sa fixation par rivetage 50 à l'autre flanc 46a, 46b ; et
- une portion extérieure 49 d'ancrage dans le bloc filtrant 30, formée par un repli axial au niveau de l'extrémité extérieure de ladite portion centrale.

En particulier, sur chacune des figures 8 et 9, les flancs 46a, 46b sont associés au bloc filtrant 30 par l'intermédiaire d'une couronne de matériau 40 qui enveloppe leurs portions extérieures 49 et la majeure partie de leurs portions centrales 48 respectives.

Sur les figures 4 à 9, la douille 32 est serrée sur une bague intérieure 37, de manière à permettre l'association de l'armature 31 à la tige 7 tout en permettant leur rotation relative.

Sur la figure 4, la douille 32 est serrée sur la bague intérieure 37 du roulement supérieur 36a, la bague intérieure 37 du roulement inférieur 36b venant en appui axial contre un épaulement 34 formé sur la tige 7. Par ailleurs, une entretoise 35 est montée autour de la tige 7 pour être disposée en appui axial entre les bagues intérieures 37 des deux roulements 36a, 36b.

Sur les figures 5 à 9, la douille 32 est serrée sur la bague intérieure 37 du roulement unique 36, ladite bague intérieure venant en appui axial directement sur un épaulement 34 formé sur la tige 7 (figures 5, 8, 9) ou sur une entretoise 35 disposée axialement entre ladite bague intérieure et un tel épaulement 34 (figures 6, 7).

Sur les figures 6 à 9, la bague intérieure 37 est formée de deux couronnes 51 sur lesquelles une portion 53a de piste de roulement intérieure 37a est formée, lesdites couronnes étant accolées axialement pour former un point de contact sur chacune desdites portions de piste.

Par ailleurs, un joint d'étanchéité 52 est prévu à l'interface des bagues 37, 38 de chaque roulement 36, 36a, 36b pour protéger au moins un côté du chemin de roulement correspondant, notamment contre la pénétration d'éventuels polluants extérieurs tels que de l'eau, de la poussière et/ou de la boue, mais également contre les fuites de lubrifiant éventuellement présent dans ledit chemin de roulement pour faciliter la rotation relative desdites bagues.

Sur les figures, chaque roulement 36, 36a, 36b comprend deux joints d'étanchéité 52 respectivement supérieur et inférieur pour protéger les deux côtés de son chemin de roulement.

Sur la figure 8, chaque joint d'étanchéité 52 comprend une portion intérieure qui est fixée dans une gorge annulaire prévue à cet effet dans la bague intérieure 37, ainsi qu'une portion extérieure qui vient en contact frottant sur la bague extérieure 38.

Sur la figure 9, chaque joint d'étanchéité 52 comprend une portion extérieure qui est fixée sur le flanc 46a, 46b correspondant de la bague extérieure 38 au moyen des rivets 50 d'association desdits flancs, ainsi qu'une portion intérieure qui est en contact frottant sur la douille 32 et/ou sur la bague intérieure 37.

## Revendications

1. Architecture de suspension d'au moins un module de roue (1) sur un châssis (2) de véhicule automobile, ladite architecture comprenant ledit module de roue, ledit châssis, un organe (5) de suspension élastique et une jambe (6) de suspension télescopique comprenant un amortisseur présentant une tige (7) montée de façon télescopique dans un corps (8) associé au module de roue (1), ladite architecture comprenant en outre une pièce (13) de liaison de la tige (7) à une paroi (14) dudit châssis, ladite pièce de liaison comprenant un alésage (15) de réception de la tige (7), ainsi qu'une jupe inférieure (16) et qu'un manchon supérieur (17) entourant chacun ledit alésage, ledit manchon supérieur étant muni d'une bride (22) intégrant des moyens (23) de fixation sur la paroi (14), ladite architecture comprenant en outre un bloc filtrant (30) qui est disposé dans le manchon supérieur (17) en étant à l'interface entre la pièce de liaison (13) et la paroi (14), ainsi qu'une butée de choc (25) et qu'un soufflet (26) fixés chacun à la jupe inférieure (16), ladite architecture étant **caractérisée en ce que** l'organe (5) de suspension élastique est dissocié de la pièce de liaison (13) en étant associé entre le module de roue (1) et un support (3b) du châssis (2).

2. Architecture de suspension selon la revendication 1, **caractérisée en ce que** l'organe (5) de suspension élastique comprend une barre élastique (5a) formant un ressort à lame transversal, ladite barre étant fixée de part et d'autre au module de roue (1) et au support (3b).

3. Architecture de suspension selon la revendication 2, **caractérisée en ce qu'**elle comprend deux modules de roue (1) qui sont reliés par une barre élastique (5a) commune.

4. Architecture de suspension selon l'une quelconque des revendications 1 à 3, **caractérisée en ce que** la périphérie extérieure (16b) de la jupe inférieure (16) présente un bourrelet annulaire (29) autour duquel le soufflet (26) est fixé.

5. Architecture de suspension selon l'une quelconque des revendications 1 à 4, **caractérisée en ce que** la périphérie intérieure (16a) de la jupe inférieure (16) est munie de crochets (27) sur lesquels la butée de choc (25) est fixée.

6. Architecture de suspension selon l'une quelconque des revendications 1 à 5, **caractérisée en ce que** la butée de choc (25) présente une tête (25a) disposée dans la jupe inférieure (16) et un tronc (25b) s'étendant sous ladite jupe en entourant la tige (7).

7. Architecture de suspension selon l'une quelconque des revendications 1 à 6, **caractérisée en ce que** l'alésage (15) de la pièce de liaison (13) est formée dans un plateau (18) de part et d'autre duquel s'étendent le manchon supérieur (17) et la jupe inférieure (16).

8. Architecture de suspension selon les revendications 6 et 7, **caractérisée en ce que** la tête (25a) de la butée de choc (25) est en appui sous le plateau (18).

9. Architecture de suspension selon l'une quelconque des revendications 1 à 8, **caractérisée en ce que** la bride (22) est équipée d'inserts (23) de fixation dans la paroi (14).

10. Architecture de suspension selon l'une quelconque des revendications 1 à 9, **caractérisée en ce que** la pièce de liaison (13) est formée en une seule pièce, notamment par moulage.

11. Architecture de suspension selon l'une quelconque des revendications 1 à 10, **caractérisée en ce que** le bloc filtrant (30) comprend une armature rigide (31) de montage sur la tige (7).

12. Architecture de suspension selon la revendication 11, **caractérisée en ce que** l'armature (31) est montée sur la tige (7), ladite architecture comprenant une douille (32) de serrage de ladite armature montée.

13. Architecture de suspension selon la revendication 12, **caractérisée en ce que** l'armature (31) comprend une rondelle (31a) présentant un alésage (33) de montage autour de la tige (7), la douille (32) venant serrer l'armature (31) sur un épaulement (34) formé sur ladite tige.

14. Architecture de suspension selon l'une quelconque des revendications 1 à 13, **caractérisée en ce que** le bloc filtrant (30) est fixé sur la tige (7).

15. Architecture de suspension selon l'une quelconque des revendications 1 à 13, **caractérisée en ce qu'**elle comprend en outre un palier de guidage de la rotation relative entre la tige (7) et le bloc filtrant (30), ledit palier comprenant au moins un roulement (36, 36a, 36b) comprenant une bague intérieure (37) solidaire de la tige (7) et une bague extérieure (38) solidaire du bloc filtrant (30), chacune desdites bagues présentant une piste de roulement (37a, 38a) formant entre elles un chemin de roulement dans lequel des corps roulants (39) sont disposés pour permettre la rotation relative desdites bagues.
